# EUROPÄISCHE PATENTSCHRIFT

(11) **EP 1 117 221 B1**
(45) Veröffentlichungstag und Bekanntmachung des Hinweises auf die Patenterteilung: **06.10.2004**
(21) Anmeldenummer: 00127109.7
(22) Anmeldetag: 11.12.2000
(51) Int. Cl.: H04L 29/06, H04L 29/08, H04L 12/56

(54) **Verfahren zum Anbieten von Diensten in einem Telekommunikationsnetz**
Method for Service offering in a Telecommunication Network
Méthode pour l'offre des services dans un réseau de télécommunication

(30) Priorität: 12.01.2000 DE 10000947
(43) Veröffentlichungstag der Anmeldung: 18.07.2001
(73) Patentinhaber: SIEMENS AKTIENGESELLSCHAFT, 80333 München (DE)
(72) Erfinder: Frank, Michael, Dr., 81371 München (DE); Rieken, Ralf, Dr., 81674 München (DE)

(56) Entgegenhaltungen:
- WO-A-99/35753
- KEITH EDWARDS: "Core Jini" 25. Juni 1999 (1999-06-25) , PRENTICE HALL , NJ XP002231883 * Seite 58, Absätze 3,5 * * Seite 59 * * Seite 61, Absätze 1,2 * * Seite 73; Abbildungen 3-2 * * Seite 199, Absatz 1 * * Seite 202, Absatz 1 * * Seite 244, Absätze 1,3 * * Seite 321, Absatz 5 * * Seite 323, Absatz 3 - Seite 326, Absatz 1; Abbildungen 8-2 *
- GUTTMAN E ET AL: "Automatic discovery of thin servers: SLP, Jini and the SLP-Jini Bridge" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, 29. November 1999 (1999-11-29), Seiten 722-727, XP010366641 ISBN: 0-7803-5735-3
- MUNSON M ET AL: "Flexible internetworking of devices and controls" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, 29. November 1999 (1999-11-29), Seiten 1139-1145, XP010366788 ISBN: 0-7803-5735-3
- ARNOLD K: "The Jini architecture: dynamic services in a flexible network" DESIGN AUTOMATION CONFERENCE, 1999. PROCEEDINGS. 36TH NEW ORLEANS, LA, USA 21-25 JUNE 1999, PISCATAWAY, NJ, USA,IEEE, US, 21. Juni 1999 (1999-06-21), Seiten 157-162, XP010344000 ISBN: 1-58113-092-9
- "JINI ARCHITECTURAL OVERVIEW" WHITE PAPER SUN MICROSYSTEMS, 1999, XP002217546
- PIEMONT C: "GEISTREICHE VERBINDUNGEN INTELLIGENTE GERAETE IN DEZENTRALEN NETZEN" CT MAGAZIN FUER COMPUTER TECHNIK, VERLAG HEINZ HEISE GMBH., HANNOVER, DE, Nr. 20, 1998, Seiten 198-202, XP001106236 ISSN: 0724-8679

## Beschreibung

### Fachgebiet der Erfindung

Telekommunikationsnetze werden heutzutage in der Regel zentral administriert. Fügt man ein neues Netzelement hinzu, so muß sichergestellt sein, daß es sich mit den bereits vorhandenen Netzelementen "versteht", also die richtige Schnittstelle zum Netz und die richtigen Treiber hat.
Ein Schritt in der Entwicklung der Telekommunikationsnetze ist daher die Weiterentwicklung des sogenannten "Plug & Play" in Form der sogenannten Ad-Hoc-Netze.
Eine Beschreibung dieses neuartigen Netztyps, der in der Zukunft sicher an Bedeutung gewinnen wird, findet sich beispielsweise in dem Artikel "Geistreiche Verbindungen, Intelligente Geräte in dezentralen Netzen". Momentan sind verschiedene Firmen dabei, diese Mechanismen zu realisieren, wie HP (mit dem Produkt jetSend), Lucent (Inferno) und auch Microsoft (UPnP, Universal Plug 'n Play, hier siehe z. B. http://www.upnp.org) entwickeln ähnliche Systeme.
Im folgenden werden in den Ausführungsbeispielen die Jini™ Mechanismen der Firma Sun beschrieben. Dies soll jedoch keine Einschränkung für die erfindungsgemäßen Mechanismen darstellen.

### Stand der Technik

Die Architektur und Mechanismen von Jini™ werden in dem Technical White Paper "Jini™ Architectural Overview" von Sun Microsystems und auch in Keith Edwards: Core Jini, 1999, Prentice Hall beschrieben.
Ad-hoc Netze, wie das von Jini™, zeichnen sich dadurch aus, daß Netzelemente, und damit auch die von ihnen angebotene Dienste, beliebig in ein Netz eingefügt und wieder aus diesem entfernt werden können.
Unter Diensten versteht man hier allgemein eine Instanz, die von einer Person, einem Programm oder einem anderen Dienst benutzt werden kann. Es kann sich um Hardware, Software, Filter, einen Kommunikationskanal, Speicherplatz und vieles andere mehr handeln. Zur Durchführung eines Auftrags können viele einzelne Dienste erforderlich sein.
Die zentrale Steuerung wird durch sogenannte schwarze Bretter (Blackboards) übernommen. Netzelemente können dem schwarzen Brett ihre Existenz und ihre Fähigkeiten mitteilen (Join) und nach Diensten suchen, die Fähigkeiten anbieten können (lookup, discovery). Für die Benutzung der Dienste wird ein Leasing-Mechanismus angeboten, hier wird zwischen den beteiligten Instanzen eine Benutzungsdauer vereinbart, nach deren Ablauf die Ressourcen des benutzten Dienstes wieder freigegeben werden.
Die Kommunikation zwischen Diensten kann mittels Java Remote Method Invocation (RMI™) erfolgen.

Die von Jini™ beschriebenen Verfahren funktionieren derzeit innerhalb eines lokalen Ad-Hoc-Telekommunikationsnetzes.

Aufgabe der Erfindung ist es, die Verfahren zum Benutzen und Anbieten von Diensten in Ad-Hoc-Telekommunikationsnetzen zu verbessern und damit eine qualitative Erweiterung der zur Verfügung stehenden Funktionalität zu erwirken.

### Darstellung der Erfindung

Diese Aufgabe wird gelöst durch ein Verfahren gemäß Patentanspruch 1.
Der Zugriff auf Dienste wird erweitert, von dem lokalen Ad-hoc Netz, und die zugänglichen Dienste, auf andere hierarchisch benachbarte, über- oder untergeordnete Netze und damit deren zugängliche Dienste.

Die damit verbundenen Vorteile werden in den weiter unten beschriebenen Szenarien klar.

Vorteilhafte Ausgestaltungen und Weiterbildungen sind in den Unteransprüchen angegeben.
In einer ersten Ausgestaltungsform werden Dienste aus nebeneinander existierenden Ad-Hoc-Netzen gegenseitig zugänglich gemacht. Es ist eine Konfiguration der betreffenden Dienste möglich (entsprechend der bisher bekannten "optional configuration"), bei der angegeben werden kann, ob ein Dienst nur lokal verwendet werden darf, oder ob er zur Benutzung aus anderen Netzen freigegeben ist.
In einer zweiten Ausgestaltungsform werden Ad-Hoc Netze in hierarchischer Staffelung gebildet. Um einen geeigneten Dienst zu suchen, wird dann zuerst im "eigenen Netz" (lokal) gesucht, dann im hierarchisch übergeordneten, und so fort. Filtermechanismen und Verbergen von "Schichten" sind hier ebenso denkbar, wie die Unterstützung von speziellen Selektionskriterien.
Die beiden bisher beschriebenen Lösungen sind unabhängig von der Transportschicht, die für eine Verbindung der Ad-Hoc Netze auf Transport Layer Ebene sorgt (bei Jini™ oder UPnP auf IP-Ebene).
Weiterhin sind Lösungen auf Transport-Layer Ebene beispielsweise durch einen sicheren Transport Client oder durch die Ad-Hoc Middleware Ebene (beispielsweise durch eine Sicherheitsschicht in der Middleware) möglich und auch die Kombination beider.

### Kurzbeschreibung der Zeichungen

Im folgenden wird die Erfindung anhand von Ausführungsbeispielen erläutert. Dabei zeigen
- Figur 1: einen schematischen Aufbau eines beispielhaften Netzes, in dem die lokale Erweiterung angewendet wird,
- Figur 2: einen schematischen Aufbau eines beispielhaften Netzes, in dem Remote Access auf lokale Ad-Hoc Netze angewendet wird,
- Figur 3: einen schematischen Aufbau eines beispielhaften Netzes, in dem die globale Erweiterung angewendet wird,und
- Figur 4: einen schematischen Aufbau eines Ad-Hoc Netzes mit darin angemeldeten Beispiel-Diensten.

### Beschreibung der bevorzugten Ausgestaltungsformen

Jini™ steuert die Verwaltung von Resourcen remote genutzter Dienste über Blackboards.

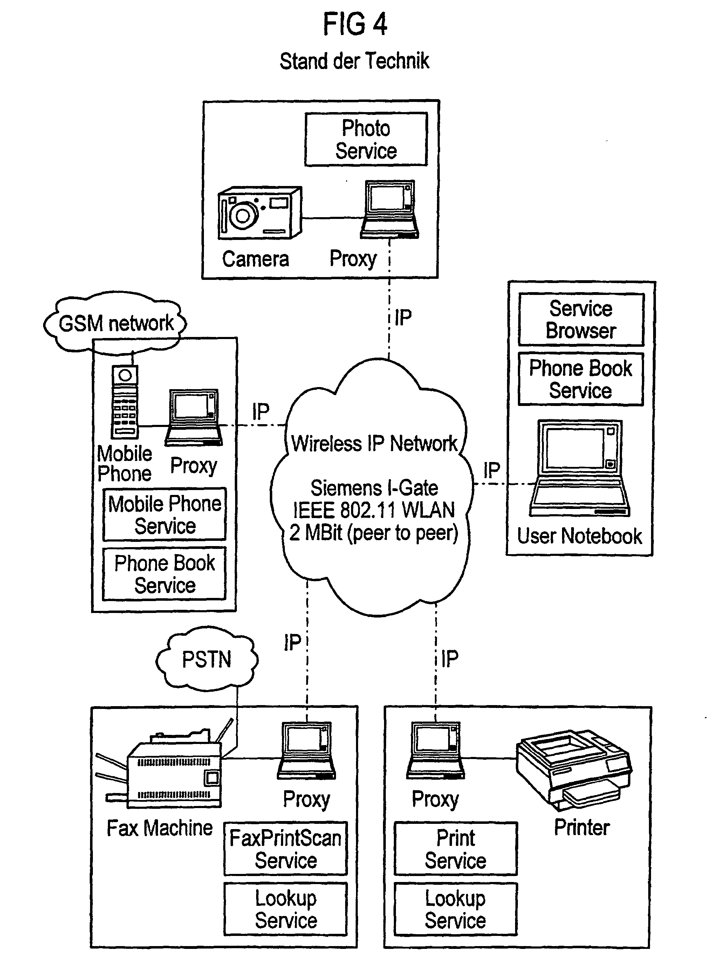

Figur 4 stellt ein beispielhaftes Szenario eines Ad-Hoc Netzes vor, um die Prinzipien von Ad-Hoc Netzen und den dabei angebotenen Diensten zu verdeutlichen. Ein Dienstnehmer (User) möchte beispielsweise einen Dienst Photo Service nutzen. Dieser ist an einem Lookup Service eingebucht und kann durch den Service Browser von dem Dienstnehmer gesucht werden.
Die dargestellten Dienste sind von ganz unterschiedlicher Natur, es handelt sich beispielsweise um
- einen Photo-Dienst,
- einen Druck-Dienst,
- einen Telefonbuch-Dienst,
- einen Scan-Dienst,
- Mobilfunkdienste (wie SMS),
- und vieles andere mehr.

Diese Dienste werden von Endgeräten unterschiedlicher Natur bereitgestellt:
- Fax-Gerät,
- Drucker,
- Scanner,
- Digitale Kamara,
- Mobil-Telefon,
- Computer, Laptop, Handheld, Organizer...
- u.v.a.m.

Diese Endgeräte wiederum können sich in verschiedenen Netzen befinden:
- Mobilfunknetz,
- herkömmliches Telefonnetz PSTN,
- hier ein wireless IP Network, beispielsweise realisiert auf Basis von Siemens I-Gate IEEE 802.11 WLAN 2Mbit peer to peer.

Ein Kunde möchte nun beispielsweise ein Foto aufnehmen und dieses an dem ihm am nächstliegenden Drucker ausdrucken. Hierfür muß er verschiedene Dienste in Anspruch nehmen. Das erzeugte Foto wird als Datei abgespeichert. Um es nun auszudrucken, muß die Datei zu einem Drucker übertragen werden (Print Service). Möglicherweise steht in der näheren Umgebung jedoch kein geeigneter Drucker zur Verfügung, dafür jedoch ein Faxgerät (FaxPrintScanService).
Der Zugriff auf die einzelnen Dienste geschieht über ein Blackboard (in der Figur nicht dargestellt). Die Dienste können als Jini-Dienste angeboten werden. Jini™ bietet dafür zusätzlich ein Transportsystem von Bedienoberflächen (Interfaces).

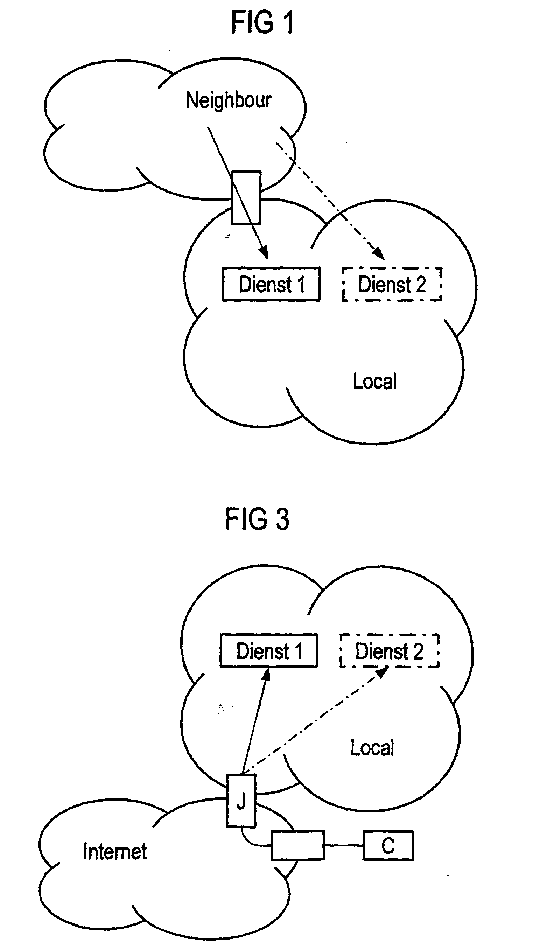

Figur 1 stellt nun eine erste vorteilhafte Ausführungsform des erfindungsgemäßen Verfahrens dar. Es existieren zwei parallele Ad-Hoc Netze Local und Neighbour, beispielsweise drahtlos eines in der eigenen Wohnung und eines in der Nachbarwohnung (oder Büro-Stockwerke, Abteilungen ...). Dem Nachbarn soll es nun ermöglicht werden, auf fremde Dienste zuzugreifen, dargestellt durch einen durchgezogenen Pfeil. Dabei ist es vorteilhaft, wenn man den Zugriff auf bestimmte Dienste zulassen ("lokal erweiterbar", Dienst1) und den Zugriff auf andere beschränken ("lokal beschränkt", Dienst2) kann, dargestellt durch den gestrichelte Pfeil.
Diese Klassifizierung wird durch die Middleware des Ad-Hoc Netzes unterstützt. Des weiteren werden nun von der Middleware nur die "lokal erweiterbaren" Dienste gegenüber dem Ad-Hoc Netz der Nachbarwohnung transparent und zugreifbar gemacht. Hierzu werden entsprechende Authentifizierungs- und Autorisierungsmechanismen in der Middleware vorausgesetzt. Unabhängig davon wird die Transportschicht gesehen. Bei den oben beschriebenen drahtlosen Netzen in Nachbarwohnungen kann die beschriebene Verbindung bisher bereits bestanden haben (und zu einem nicht bestimmbaren Zeitpunkt wieder abbrechen, beispielsweise weil das Ad-hoc Netz aufgelöst wurde.).
Die Lösung soll dabei ohne Adminstration auskommen, damit der vorteilhafte Plug & Play Mechanismus nicht verletzt wird. Es können sich aber zum Beispiel alle Endgeräte einem bestimmten Ad-hoc Netz zuordnen, indem sie eine Karte, einen Chip oder einen Namen zugeordnet bekommen.

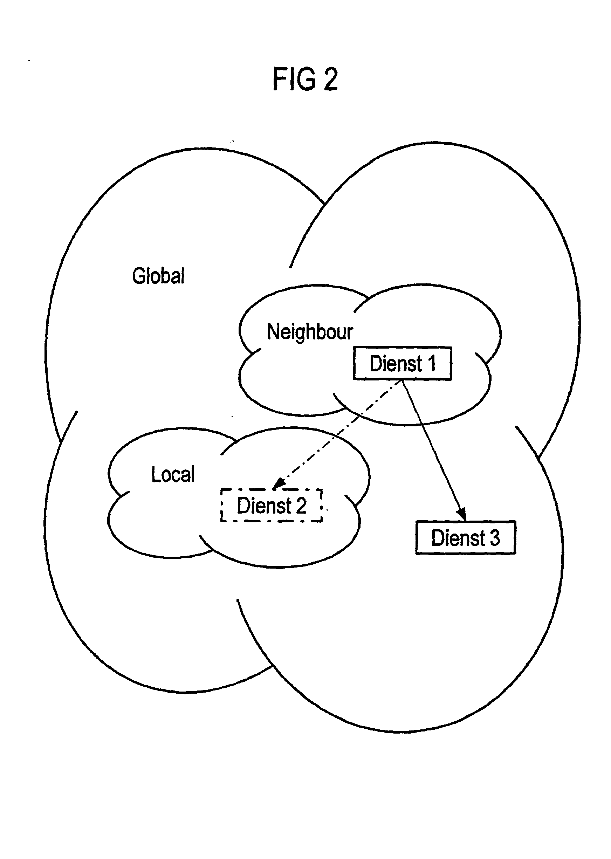

Figur 2 stellt eine Hierarchie von Ad-Hoc Netzen dar, in der nach dem Zwiebelprinzip innere (local) in äußere Netze (Global) geschachtelt sind. Der gewünschte Dienst wird immer zuerst im eigenen, dann im benachbarten Netz (Neighbour) gesucht, und dann eine Schicht nach der anderen weiter nach außen. Je nach Anwendung kann ein Verbergen der Schichten oder eine Schicht bzw ein Ad-Hoc Netz als Selektionskriterium unterstützt werden.
Auch hier ist die technische Lösung unabhängig von dem Transportlayer, der abhängig vom Netz aus ganz unterschiedlichen z. B. drahtgebundenen und drahtlosen Medien bestehen kann.

Figur 3 schließlich stellt im Gegensatz zu Figur 1 und Figur 2 den Remote Access auf lokale Ad-hoc Netze über einen Transport Client C und ein Jini Gateway J auf Transport-Layer Ebene dar. Auch über eine Sicherheitsschicht in der Middleware Ebene des Jini Gateways kann der Zugriff erfolgen.

### Literaturverzeichnis

"Geistreiche Verbindungen, Intelligente Geräte in dezentralen Netzen", Claudia Piemont, c't 20/1998, Seite 198 - 202.

"JINI™ Architectural Overview", Technical White Paper,
SUN microsystems, January 1999
(beispielsweise zu finden unter http://www.sun.com/jini/)

## Patentansprüche

1. Verfahren zum Zugriff auf Dienste eines ersten Ad-Hoc-Telekommunikationsnetz (local),
das selbstkonfigurierend ist und aus einer Vielzahl von Netzelementen und Diensten (Dienst1, Dienst2) besteht, die verteilt in diesem Telekommunikationsnetz existieren und die sich durch dafür eigens vorgesehene Mechanismen in dieses Netz einbuchen und wieder ausbuchen können, von einem zweiten, von dem ersten Netz unabhängigen, Ad-Hoc-Telekommunikationsnetz (Neighbour),
**dadurch gekennzeichnet, daß**
ein Dienst (Dienst1, Dienst2) des ersten Ad-Hoc-Telekommunikationsnetzes (Local) dahingehend konfiguriert wird, dass der Dienst (Dienst2) nur lokal in dem ersten Ad-Hoc-Telekommunikationsnetz zur Verfügung steht, oder der Dienst (Dienst1) auch von einem zweiten Netz (Neighbour) aus zugreifbar ist und
von welchen zweiten Netzen (Neighbour) aus der zugreifbaren Dienste (Dienst1)ein Zugriff gestattet ist.

2. Verfahren nach Patentanspruch 1,
**dadurch gekennzeichnet, dass**
ein benötigter Dienst (Dienst2) nach einer festgelegten Strategie gesucht wird:
- zuerst in dem eigenen Ad-Hoc Telekommunikationsnetz (Local),
- danach in den benachbarten Telekommunikationsnetzen (Neighbour),
- in dem nächsten übergeordneten Telekommunikationsnetz (Global).

3. Verfahren nach Patentanspruch 1 oder 2,
**dadurch gekennzeichnet, dass**
der Zugriff auf den Dienst (Dienst1) in dem ersten Ad-Hoc Telekommunikationsnetz (Local) über ein zweites, von dem Ad-Hoc-Netz verschiedenes, Telekommunikationsnetz (Internet) und ein Gateway (J) geschieht.

## Claims

1. Method for access to services of a first ad hoc telecommunications network (local),
that is self-configuring and comprises a multiplicity of network elements and services (servicel, service2), which are distributed in this telecommunications network and can book themselves into and back out of this network by mechanisms specifically provided for the purpose,
from a second ad hoc telecommunications network (neighbour) independent of the first network,
**characterized in that**
a service (servicel, service2) of the first ad hoc telecommunications network (local) is configured to the effect that the service (service2) is only available locally in the first ad hoc telecommunications network, or the service (service1) is also accessible from a second network (neighbour), and
from which second network (neighbour) access is permitted to the accessible service (servicel).

2. Method according to Claim 1,
**characterized in that**
a search for a required service (service2) is made according to a defined strategy:
- first in the immediate ad hoc telecommunications network (local),
- then in the neighbouring telecommunications networks (neighbour),
- in the telecommunications network in the next level above (global).

3. Method according to Claim 1 or 2,
**characterized in that**
access to the service (service1) in the first ad hoc telecommunications network (local) happens via a second telecommunications network (Internet), different from the ad hoc network, and a gateway (J).

## Revendications

1. Procédé d'accès à des services d'un premier réseau de télécommunication ad hoc (local), qui a une capacité d'auto-configuration et qui est constitué d'une pluralité d'éléments de réseau et de services (service 1, service 2) qui existent de manière répartie dans ce réseau de télécommunication et qui peuvent s'inscrire et se désinscrire dans ce réseau par des mécanismes prévus spécialement à cet effet, par un deuxième réseau de télécommunication ad hoc (voisin) indépendant du premier réseau,
**caractérisé en ce que**
un service (service 1, service 2) du premier réseau de télécommunication ad hoc (local) est configuré de telle sorte que le service (service 2) n'est disponible que localement dans le premier réseau de télécommunication ad hoc ou de telle sorte que le service (service 1) puisse également être accédé depuis un deuxième réseau (voisin) et **en ce que**
un accès est permis à partir dudit deuxième réseau (voisin) aux services accessibles (service 1).

2. Procédé selon la revendication 1, **caractérisé en ce qu'**un service requis (service 2) est cherché selon une stratégie définie:
- d'abord dans le réseau de télécommunication ad hoc propre (local),
- ensuite dans les réseaux de télécommunication voisins (voisins) et
- enfin dans le réseau de télécommunication d'ordre hiérarchique supérieur suivant (global).

3. Procédé selon la revendication 1 ou 2, **caractérisé en ce que** l'accès au service (service 1) dans le premier réseau de télécommunication ad hoc (local) s'effectue par un deuxième réseau de télécommunication (Internet), différent du réseau ad hoc, et par un gateway (J).
